(19) Europäisches Patentamt

European Patent Office

Office européen des brevets

(11) Veröffentlichungsnummer: **0 098 915**
**B1**

(12) **EUROPÄISCHE PATENTSCHRIFT**

(45) Veröffentlichungstag der Patentschrift: 15.06.88

(51) Int. Cl.⁴: **G 05 B 19/10**

(21) Anmeldenummer: 83102123.3

(22) Anmeldetag: 04.03.83

(54) Elektronische Steuerung.

(30) Priorität: 23.06.82 DE 3223383

(43) Veröffentlichungstag der Anmeldung:
25.01.84 Patentblatt 84/04

(45) Bekanntmachung des Hinweises auf die
Patenterteilung:
15.06.88 Patentblatt 88/24

(84) Benannte Vertragsstaaten:
AT CH DE FR GB IT LI

(56) Entgegenhaltungen:
FR-A-2 437 651
US-A-3 986 040
US-A-4 200 225

Die Akte enthält technische Angaben, die nach
dem Eingang der Anmeldung eingereicht
wurden und die nicht in dieser Patentschrift
enthalten sind.

(73) Patentinhaber: WABCO Westinghouse
Fahrzeugbremsen GmbH
Am Lindener Hafen 21 Postfach 91 12 80
D-3000 Hannover 91 (DE)

(72) Erfinder: Binarsch, Jürgen
Am Eichkamp 18
D-3051 Haste (DE)
Erfinder: Meyer, Dietmar
Egestorfer Strasse 65
D-3013 Barsinghausen 65 (DE)

(74) Vertreter: Schrödter, Manfred
WABCO Westinghouse Fahrzeugbremsen
GmbH Am Lindener Hafen 21 Postfach 91 12 80
D-3000 Hannover 91 (DE)

Courier Press, Leamington Spa, England.

## Beschreibung

Die Erfindung bezieht sich auf eine elektronische Steuerung gemäß dem Oberbegriff des Patentanspruchs 1.

Elektronische Steuerungen haben z.B. die Aufgabe, in Abhängigkeit von den Spannungswerten an mehreren Eingängen nach einem vorgegebenen Programm mehrere Ausgänge anzusteuern. Dabei können an die Eingänge z.B. Befehlstaster, Endschalter oder Geber für Temperatur und Druck angeschlossen sein. An die Ausgänge können z.B. Signallampen, Relais, Zeitglieder oder Magnetventile angeschlossen sein.

Bei bestimmten Anwendungsgebieten, z.B. bei Türsteuerungen für Busse und Bahnen, ist es nun erforderlich, zahlreiche Sonderwünsche der verschiedenen Verkehrsbetriebe zu berücksichtigen. Diese betreffen z.B. unter schiedliche Bedienungs- und Funktionsabläufe, zusätzliche Blinkgeber, unterschiedliche Anzahl und Arten von Türen, besondere Warneinrichtungen u.a.. Um diese Wünsche zu erfüllen, kamen bislang unterschiedliche Elektroniken zum Einsatz. Dies bedeutet aber eine kostspielige Entwicklung und Lagerhaltung von zahlreichen kundenspezifischen Sonderausführungen.

Es ist zwar denkbar, eine universelle Elektronik zu bauen, und diese mit einem steckbaren Programmspeicher oder mit einem Kodierschalter zum Einstellen verschiedener Programme auszustatten. Aber auch diese Lösungen sind für große Stückzahlen noch zu aufwendig.

Aus der US—A—3 986 040 ist eine elektronische Steuerung für eine Waschmaschine bekannt, die in einem Speicher ein Grund-Wasch-Programm enthält. Dieses Grundprogramm kann abgeändert werden mittels eines zusätzlichen Elektronik-Bausteins, der ein UND-Gleid enthält, welches zu Beginn jedes Waschvorganges seine Eingangs-Verdrahtung abtastet. Je nach dem wie diese Verdrahtung kodiert ist, werden unterschiedliche Spezialprogramme wirksam.

Nachteilig an der bekannten Steuerung ist die Notwendigkeit eines zusätzlichen Elektronik-Bausteins sowie die relativ geringe Anzahl der möglichen Programm-Varianten.

Der Erfindung liegt die Aufgabe zugrunde, eine elektronische Steuerung der eingangs genannten Art zu bauen, welche ohne externe Logikverschaltung, wie Relais, Druckschalter und Verzögerungsglieder, für unterschiedliche Sonderfunktionen einsetzbar ist. Dabei soll für den jeweiligen Sonderfunktionswunsch keine Umschaltung am Steuergerät nötig sein.

Diese Aufgabe wird durch die im Patentanspruch 1 enthaltene Erfindung gelöst. Ein wesentlicher Vorteil der Erfindung besteht darin, daß sich die Elektronik durch Abtasten der jeweiligen externen angeschlossenen Bauteile, das zugehörige spezielle Programm auswählt. Diese Bauteil können die in verschiedenen externen Schaltungen vorhandenen Bauelemente sein. Es können aber auch spezielle zur Codierung angeschlossene Dioden sein.

Die Erfindung wird im folgenden anhand einer Zeichnung näher erläutert. Diese zeigt die elektronische Steuerung mit einer Ansteuerschaltung 10, die einen Mikroprozessor sowie einen Programmspeicher enthält, der für alle vorkommenden Anwendungsfälle Programme aufweist.

Die Ansteuerschaltung 10 hat Eingänge 1 bis m sowie die Ausgänge 1 bis n. Die Ausgänge 1, 2, 3 und n sind über Dioden D1 bis D3 und Dn entkoppelt an eine Sonderfunktionsleitung 5 angeschlossen. Diese ist an einen zusätzlichen Eingang 6 (MOD) der Ansteuerschaltung 10 angeschlossen.

Beim Einschalten der Steuerung werden nacheinander alle Ausgänge 1 bis n kurzzeitig aktiviert und das Ergebnis über den Eingang (MOD) geprüft. Durch diesen Testlauf erkennt die Steuerung, ob bestimmte externe Bauteile, wie. z.B. ein Relais 7 oder eine Signallampe 8 angeschlossen sind. Es können auch Dioden, Widerstände oder Kondensatoren zur Codierung angeschlossen sein.

Aufgrund des Testergebnisses wird das infrage kommende Programm ausgewählt, d.h. im Funktionsablauf der Türsteuerung bestimte Steuerschritte übersprungen, eingefügt oder anders ausgeführt

Bei n-Ausgängen ergeben sich bei Codierung mittels Dioden max. $2^n$ verschiedene mögliche Programmvarianten.

Falls ein Ausgang ein aktives Signal von auße erhalten kann, wie z.B. der Ausgang 1 durch einen Taster 9, dann muß dieses durch eine zusätzliche Diode 11 abgesperrt werden.

Um Störungen beim Test und somit fehlerhafte Funktionsabläufe auszuschließen, wird zunächste geprüft, ob ein fehlerhaftes Aktivsignal an dem Eingang MOD ansteht und ob die Ausgänge alle aktiviert werden können und nicht z.B. durch einen Kurzschluß auf Nullsignal gezwungen werden.

Neben der oben beschriebenen Ankopplung der Sonderfunktionsleitung 5 über Dioden ist auch eine Ankopplung über Widerstände und/oder Kondensatoren möglich (nicht dargestellt), wobei die Anzahl der Programm-Varianten durch den Einsatz unterschiedlicher Widerstands- und Kapazitätswerte noch erweitert werden kann. Hierbei können unterschiedliche Signalamplituden und Pulsdauerwerte am Eingang MOS ausgewertet werden.

Die erfingungsgemäße Steuerung ist nicht nur bei Türsteuerungen, sondern allgemein anwendbar.

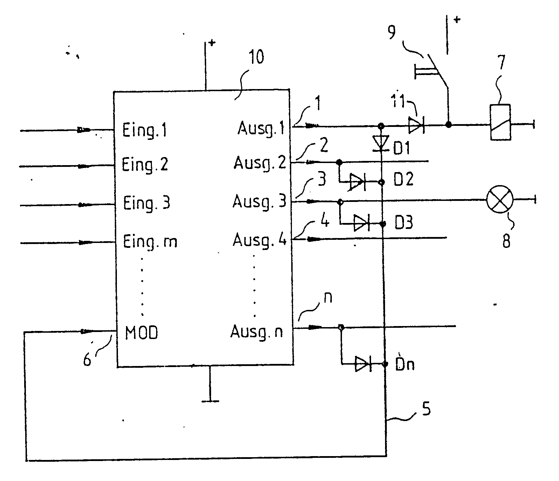

## Patentansprüche

1. Elektronische Steuerungseinrichtung (10) mit mehreren Eingängen (1 bis m) und Ausgängen (1 bis n), mit einem Prozessor und einem Programmspeicher, wobei die Ausgänge (1 bis n) nach mehreren vorgegebenen unterschiedlichen Programmen in Abhängigkeit von den an den Eingängen (1 bis m) anliegenden Signalen ansteuerbar sind, und wobei an die Ausgänge (1 bis n) je nach speziellem Anwendungsfall verschiedene externe Bauteile (7, 8) angeschaltet sind, gekennzeichnet durch folgende Merkmale:

a) Die elektronische Steuerungseinrichtung (10) ist derart ausgebildet, daß die Ausgänge (1 bis n) bei ihrer Inbetriebnahme nacheinander angesteuert werden;

b) eine Sonderfunktionsleitung (5) ist an einen zusätzlichen Eingang (6) (MOD) der Steuerungseinrichtung (10) angeschlossen;

c) zur Abtastung der Ausgänge (1 bis n) ist die Sonderfunktionsleitung (5) entkoppelt an Ausgänge (1 bis n) angeschlossen;

d) die Steuerungseinrichtung (10) wählt aufgrund der abgetasteten Signale der Sonderfunktionsleitung (5) am Eingang (6) (MOD) das zu dem speziellen Anwendungsfall gehörende Programm aus.

2. Steuerungseinrichtung nach Anspruch 1, dadurch gekennzeichnet, daß die Entkoppelung über Dioden (D1, D2, D3, Dn) erfolgt.

3. Steuerungseinrichtung nach Anspruch 1, dadurch gekennzeichnet, daß die Entkoppelung über Widerstände und/oder Kondensatoren erfolgt.

**Revendications**

1. Dispositif de commande électronique (10) comportant plusieurs entrées (1 à m) et sorties (1 à n), ave un processeur et une mémoire de programmes, les sorties (1 à n) pouvant être attaquées selon plusieurs programmes différents prédéterminés, en fonction des signaux appliqués aux entrées (1 à m), et divers organes externes (7, 8) étant reliés aux sorties (1 à n) selon l'application considérée, ledit dispositif étant caractérisé en ce que:

a) le dispositif de commande électronique (10) est réalisé de façon que les sorties (1 à n) soient attaquées successivement lors de la mise en service;

b) un fil (5) de fonction spéciale est relié à une entrée supplémentaire (6) fermée (MOD) du dispositif de commande (10);

c) le fil (5) de fonction spéciale est relié avec découplage à des sorties ( à n) pour la scrutation des sorties (1 à n); et

d) le dispositif de commande (10) sélecte le programme correspondant à l'application particulière considérée, à partir des signaux scrutés sur le fil (5) de fonction spéciale à l'entrée (6) (MOD).

2. Dispositif de commande selon revendication 1, caractérisé en ce que le découplage est assuré par des diodes (D1, D2, D3, Dn).

3. Dispositif de commande selon revendication 1, caractérisé en ce que le découplage est assurée par des résistances et/ou condensateurs.

**Claims**

1. Electronic control device (10) having several inputs (1 to $m$) and outputs (1 to $n$), and having a processor and a programme memory it being possible to control the outputs (1 to $n$) in accordance with several different predetermined programmes in response to the signals present at the inputs (1 to $m$), and various external components (7, 8) being connected to the outputs (1 to $n$) according to the specific application, characterised by the following features:

a) the electronic control device (10) is such that the outputs (1 to $n$) are activated one after the other when the device is started up;

b) a special function line (5) is connected to an additional input (6) (MOD) of the control device (10);

c) in order to sense the outputs (1 to $n$) the special function line (5) is connected by independent means to outputs (1 to $n$);

d) the control device (10) selects the programme associated with the specific application on the basis of the signals of the special function line (5) sensed at the input (6) (MOD).

2. Control device according to claim 1, characterised in that the independent connection is effected by means of diodes (D1, D2, D3, Dn).

3. Control device according to claim 1, characterised in that the independent connection is effected *via* resistors and/or capacitors.